(19) Europäisches Patentamt

European Patent Office

Office européen des brevets

(11) **EP 1 742 485 A2**

(12) **EUROPEAN PATENT APPLICATION**

(43) Date of publication:
**10.01.2007 Bulletin 2007/02**

(51) Int Cl.:
***H04N 7/36*** *(2006.01)*

(21) Application number: **06116680.7**

(22) Date of filing: **05.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **07.07.2005 KR 2005061088**

(71) Applicant: **Samsung Electronics Co., Ltd**
**Suwon-si, Gyeonggi-do 442-742 (KR)**

(72) Inventors:
• **Kim, Myung-jae**
**Seoul (KR)**

• **Sohn, Young-wook**
**Seongnam-si, Gyeonggi-do (KR)**
• **Seong, Hwa-seok**
**Suwon-si, Gyeonggi-do (KR)**
• **Min, Jong-sul**
**Hwaseong-si, Gyeonggi-do (KR)**
• **Kang, Jeong-woo**
**Suwon-si (KR)**

(74) Representative: **Walaski, Jan Filip et al**
**Venner Shipley LLP**
**20 Little Britain**
**London EC1A 7DH (GB)**

(54) **Motion estimator and estimating method**

(57)     A motion estimator and motion estimating method are provided for dividing a current frame into a plurality of blocks and estimating motion by comparing a current block with a previous frame. The motion estimator comprises a mean motion estimation unit for computing a mean motion vector based on motion vectors of surrounding blocks adjacent to the current block, a line motion generation unit for generating a line motion vector in a predetermined search area based on motion vectors of horizontal blocks of the current block, and a motion vector selection unit for selecting and outputting one of the mean motion vector and the line motion vector as a final motion vector of the current block based on a mean motion expectation error value in accordance with the mean motion vector and a line motion expectation error value in accordance with the line motion vector. Aspects of the present invention provide a motion estimator for searching correct motion vectors in the case of moving objects or occurrence of scrolling text against a moving background.

FIG. 1
(PRIOR ART)

EP 1 742 485 A2

**Description**

The present invention relates to a motion estimator and a motion estimating method thereof. More particularly, the present invention relates to a motion estimator and method for determining correct motion vectors.

In general, conversion of frame rates using frame rate converters in display devices can have an excellent effect on display panels by improving timing, gray level expressions, and the like. For this purpose, motion estimating and compensating techniques using block unit motion vectors are applied to frame rate converters and deinterlacers, through which natural motion images can be displayed. However, traditional motion estimating and compensating techniques are limited in their practical applications because correct motion vectors cannot be searched.

Searching for correct motion vectors is different from motion estimation techniques used in the standards promulgated by the Motion Picture Experts Group (MPEG). Motion vectors different from correct motion vectors are searched in MPEG because searching for a block having the smallest Sum of Absolute Difference (SAD) value under the MPEG standard is advantageous for compression. That is, if a motion estimating method for simply minimizing SADs is used in MPEG, although it visually shows motion vectors having a specific direction, the method is different from correct motion vectors in accordance with fine variation of the luminance of an object focused by cameras, external illumination, rotation, zooming/patterning or the like, so that many motion vectors are visually shown incorrectly in general moving images as well as in text.

In particular, a text scroll on a moving background can be an example of an object with which it is difficult to search for correct motion vectors. Since text has many edges that are similar, it is difficult to identify the correct motion vectors with only SAD values. Especially, if the text also moves on the moving background, searching for correct motion is more difficult.

A conventional motion estimator and will be described with reference to Figure 1. Figure 1 shows the technical content disclosed in U.S. Patent No. 6,385,245 to De Haan et al., entitled "Motion Estimation and Motion-Compensated Interpolation,".

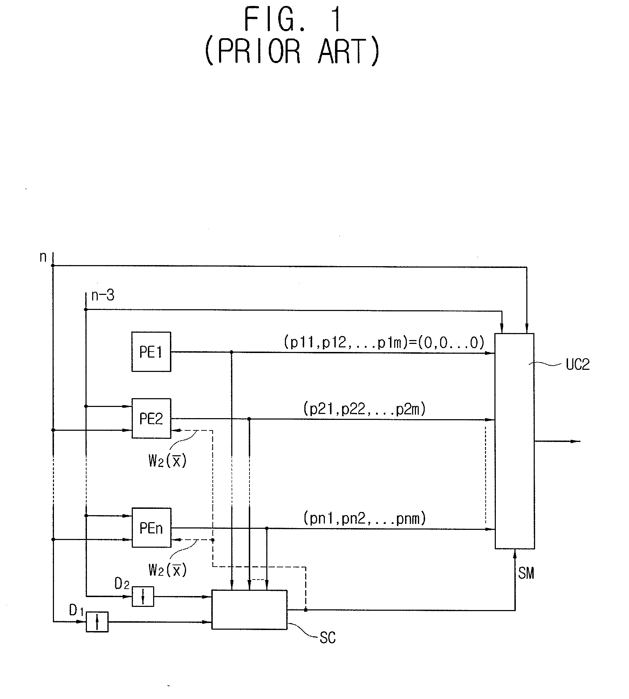

Figure 1 shows n parameter estimator PE blocks for generating n(n≥2) motion objects, and a selection block (up-converter) UC2 for having SAD values, which indicate motion variables (such as information on motion vectors) and motion errors, input from each of the PE blocks and selecting any one of them as a motion vector.

The n PEs calculate motion vectors and SAD values of motion objects with respect to present blocks from current and previous frames. Here, motion objects mean objects which can be selected as a final motion vector, with the number of whole pixels in search areas becoming the number of motion objects in the case of a full-search method. To reduce the number of hardware units and to search correct motion vectors, the motion objects are selected not using the whole motion objects but using motion vectors and SAD values at several points where a current block is expected to move. Then, the up-converter block UC2 selects a motion vector having the smallest value among the SAD values input from the PEs as a final motion vector.

This related art is a method for selecting a final motion vector using a few numbers of motion objects, in which it is assumed that motion object vectors should indicate the direction where a current block is expected to move, and a correct motion has the minimum SAD value among them. However, the traditional method has the disadvantage that it is difficult to search for correct motion vectors if objects move or if text scrolls are generated on moving backgrounds.

Accordingly, it is an object of the present invention to provide a motion estimating method and apparatus for searching correct motion vectors for moving objects or scrolling text against a moving background.

The foregoing and other objects can be achieved, in accordance with an aspect of the present invention, by providing a motion estimator for dividing a current frame into a plurality of blocks and estimating motion by comparing a current block with a previous frame. The motion estimator comprises a mean motion estimation unit for computing a mean motion vector based on motion vectors of surrounding blocks adjacent to the current block, a line motion generation unit for generating a line motion vector in a predetermined search area based on motion vectors of horizontal blocks of the current block, and a motion vector selection unit for selecting and outputting one of the mean motion vectors and the line motion vector as a final motion vector of the current block based on a mean motion expectation error value in accordance with the mean motion vector and a line motion expectation error value in accordance with the line motion vector.

According to another aspect of the present invention, the motion vector selection unit selects and outputs a motion vector corresponding to the smaller of the mean motion expectation error value and the line motion expectation error value as the final motion vector of the current block.

According to another aspect of the present invention, the motion estimator further comprises a motion correction unit for correcting the final motion vector of the current block.

According to another aspect of the present invention, the motion estimator further comprises a zero motion generation unit for computing a zero motion vector at a location where motion of the current block is zero, wherein the motion vector selection unit selects and outputs one of the mean motion vector, the line motion vector and the zero motion vector as the final motion vector of the current block based on the mean motion expectation error value, the line motion expectation error value and a zero motion expectation error value in accordance with the zero motion vector.

According to another aspect of the present invention, the motion vector selection unit selects and outputs a motion vector corresponding to the smallest of the mean motion expectation error value, the line motion expectation error value, and the zero motion expectation error value as the final motion vector of the current block.

According to another aspect of the present invention, the motion estimator further comprises an arbitrary motion estimation unit for estimating an arbitrary motion vector of the current block by comparing the current block with a full-search area set to the previous frame, and wherein the motion vector selection unit selects and outputs one of the mean motion vector, the line motion vector, the zero motion vector and the arbitrary motion vector as the final motion vector of the current block based on the mean motion expectation error value, the line motion expectation error value, the zero motion expectation error value and an arbitrary motion expectation error value in accordance with the arbitrary motion vector.

According to another aspect of the present invention, the motion estimator further comprises a motion correction unit for correcting the final motion vector of the current block.

According to another aspect of the present invention, the motion vector selection unit selects and outputs a motion vector corresponding to the smallest of the mean motion expectation error value, the line motion expectation error value, the zero motion expectation error value, and the arbitrary motion expectation error value as the final motion vector.

According to another aspect of the present invention, the motion vector selection unit selects and outputs the zero motion vector as the final motion vector of the current block if the zero motion expectation error value is smaller than or equal to a first reference value, and the third error value is smaller than or equal to a first minimum value being a minimum value of the first error value, the second error value, and the fourth error value.

According to another aspect of the present invention, the motion vector selection unit selects and outputs the line motion vector as the final motion vector of the current block if the zero motion vector is not selected as the final motion vector, and if the line motion expectation error value is smaller than or equal to a second reference value, and a fourth error value multiplying the line motion expectation error value by a fifth weight is smaller than or equal to a second minimum value being a minimum value of a sixth error value multiplying the mean motion expectation error value by a sixth weight, a seventh error value multiplying the zero motion expectation error value by a seventh weight, and an eighth error value multiplying the arbitrary motion expectation error value by an eighth weight.

According to another aspect of the present invention, the motion vector selection unit selects and outputs the mean motion vector as the final motion vector of the current block if the zero motion vector and the line motion vector are not selected and output as the final motion vector, and if the mean motion expectation error value is smaller than or equal to a third reference value, and a ninth error value multiplying the mean motion expectation error value by a ninth weight is smaller than or equal to a third minimum value being a minimum value of a tenth error value multiplying the line motion expectation error value by a tenth weight, an eleventh error value multiplying the zero motion expectation error value by an eleventh weight, and a twelfth error value multiplying the arbitrary motion expectation error value by a twelfth weight.

According to another aspect of the present invention, the motion vector selection unit selects and outputs the arbitrary motion vector as the final motion vector of the current block if the zero motion vector, the line motion vector, and the mean motion vector are not selected as the final motion vector.

According to another aspect of the present invention, the motion estimator further comprises a motion correction unit for correcting the final motion vector of the current block.

According to another aspect of the present invention, the motion expectation error value is computed by one of the Sum of Absolute Difference (SAD) and Mean Absolute Difference (MAD).

According to another aspect of the present invention, the motion vector selection unit selects and outputs the final motion vector based on a first error value multiplying the mean motion expectation error value by a first weight, a second error value multiplying the line motion expectation error value by a second weight, a third error value multiplying the zero motion expectation error value by a third weight, and a fourth error value multiplying the arbitrary motion expectation error value by a fourth weight.

According to another aspect of the present invention, the motion vector selection unit selects and outputs the final motion vector in accordance with a priority order.

According to another aspect of the present invention, the priority order is set in order of the zero motion vector, the line motion vector, the mean motion vector, and the arbitrary motion vector.

According to another aspect of the present invention, the arbitrary motion estimation unit comprises an operator for computing the arbitrary motion vector, and wherein at least one of the mean motion computation unit, the line motion generation unit, and the zero motion generation unit generates the motion vector sharing the operator.

According to another aspect of the present invention, the motion vector selection unit selects and outputs a motion vector corresponding to the smallest of a value multiplying the mean motion expectation error value by a first weight, a value multiplying the line motion expectation error value by a second weight, and a value multiplying the zero motion expectation error value by a third weight as the final motion vector.

According to another aspect of the present invention, the motion vector selection unit selects and outputs a motion vector corresponding to a smaller of a value multiplying the mean motion expectation error value by a first weight and a value multiplying the line motion expectation error value by a second weight as the final motion vector of the current block.

The foregoing and other aspects of the present invention can be achieved by providing a motion estimating method for dividing a current frame into a plurality of blocks and estimating motion by comparing a current block with a previous frame. The method comprises computing a mean motion vector based on motion vectors of blocks adjacent to the current block, generating a line motion vector in a search area based on motion vectors of horizontal blocks of the current block, and selecting and outputting any one of the mean motion vector and the line motion vector as a final motion vector of the current block based on a mean motion expectation error value in accordance with the mean motion vector and a line motion expectation error value.

According to another aspect of the present invention, outputting of the final motion vector comprises selecting and outputting a motion vector corresponding to the smaller of the mean motion expectation error value and the line motion expectation error value as a final motion vector of the current block.

According to another aspect of the present invention, the method further comprises generating a zero motion vector at a location where motion of a current block is zero, wherein outputting the final motion vector comprises selecting and outputting any one of the mean motion vector, the line motion vector, and the zero motion vector as a final motion vector of the current block based on the mean motion expectation error value, the line motion expectation error value, and a zero motion expectation error value in accordance with the zero motion vector.

According to another aspect of the present invention, the method further comprises estimating an arbitrary motion vector of a current block by comparing the current block with a full-search area set to a previous frame, and wherein outputting the final motion vector comprises selecting and outputting any one of the mean motion vector, the line motion vector, the zero motion vector, and the arbitrary motion vector as a final motion vector of the current block based on the mean motion expectation error value, the line motion expectation error value, the zero motion expectation error value, and an arbitrary motion expectation error value in accordance with the arbitrary motion vector.

According to another aspect of the present invention, at least one of generating of the mean motion vector, generating of the line motion vector, and generating of the zero motion vector generates a motion vector based on a motion vector previous to the current frame.

According to another aspect of the present invention, outputting of the final motion vector comprises selecting and outputting the final motion vector in accordance with a priority order.

According to another aspect of the present invention, the priority order is set in order of the zero motion vector, the line motion vector, the mean motion vector, and the arbitrary motion vector.

According to another aspect of the present invention, outputting of the final motion vector comprises selecting and outputting the zero motion vector as a final motion vector of the current block if the zero motion expectation error value is smaller than or equal to a first reference value, and a third error value multiplying the zero motion expectation error value by a third weight is smaller than or equal to a first minimum value being a minimum value of a first error value multiplying the mean motion error value by a first weight, a second error value multiplying the line motion error value by a second weight, and a fourth error value multiplying the arbitrary motion error value by a fourth weight.

According to another aspect of the present invention, outputting of the final motion vector comprises selecting and outputting the line motion vector as a final motion vector of the current block if the zero motion vector is not selected as the final motion vector, and if the line motion expectation error value is smaller than or equal to a second reference value, and a fourth error value multiplying the line motion expectation error value by a fifth weight is smaller than or equal to a second minimum value being a minimum value of a sixth error value multiplying the mean motion expectation error value by a sixth weight, a seventh error value multiplying the zero motion expectation error value by a seventh weight, and an eighth error value multiplying the arbitrary motion expectation error value by an eighth weight.

According to another aspect of the present invention, outputting of the final motion vector comprises selecting and outputting the mean motion vector as a final motion vector of the current block if the zero motion vector and the line motion vector are not selected and output as the final motion vector, and if the mean motion expectation error value is smaller than or equal to a third reference value, and a ninth error value multiplying the mean motion expectation error value by a ninth weight is smaller than or equal to a third minimum value being a minimum value of a tenth error value multiplying the line motion expectation error value by a tenth weight, an eleventh error value multiplying the zero motion expectation error value by an eleventh weight, and a twelfth error value multiplying the arbitrary motion expectation error value by a twelfth weight.

According to another aspect of the present invention, outputting of the final motion vector comprises selecting and outputting the arbitrary motion vector as a final motion vector of the current block if the zero motion vector, the line motion vector, and the mean motion vector are not selected as the final motion vector.

The above and other exemplary aspects and advantages of the prevent invention will become more apparent from the following description of certain exemplary embodiments, taken in conjunction with the accompany drawings, in which:

Figure 1 is a block diagram of a conventional motion estimator;
Figure 2 is a block diagram of a motion estimator according to a first exemplary embodiment of the present invention;
Figure 3 is a view illustrating an extracting method of line motion vectors according to the first exemplary embodiment of the present invention;
Figure 4 is a block diagram of a motion estimator according to second and third exemplary embodiments of the present invention;
Figure 5 is a view illustrating an extracting method of motion vectors according to the second exemplary embodiment of the present invention;
Figure 6 is a block diagram of a motion estimator according to the third exemplary embodiment of the present invention;
Figure 7 is a block diagram for selecting motion vectors according to the third exemplary embodiment of the present invention; and
Figure 8 is a table for a priority order and selection according to the third exemplary embodiment of the present invention.

Throughout the drawings, like reference numbers should be understood to refer to like elements, features, and structures.

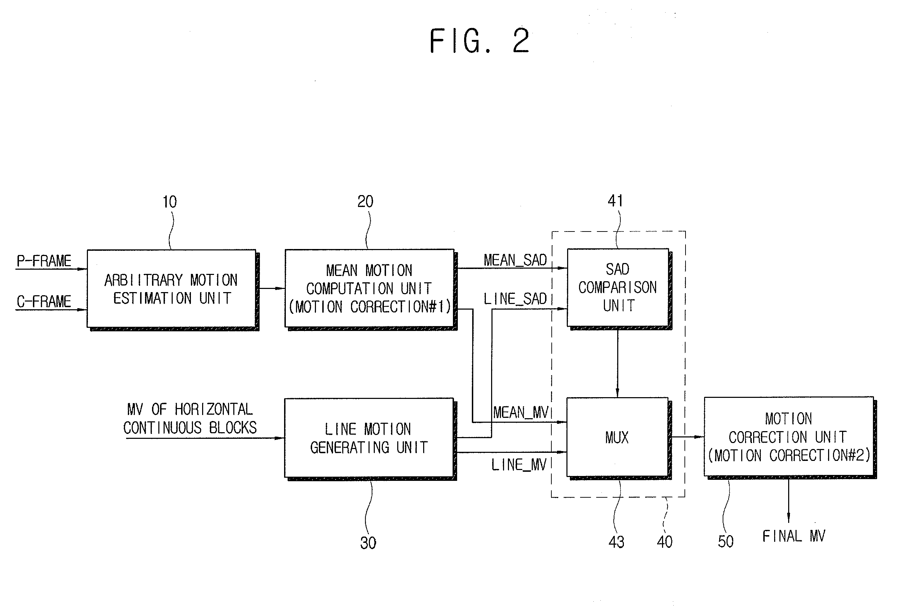

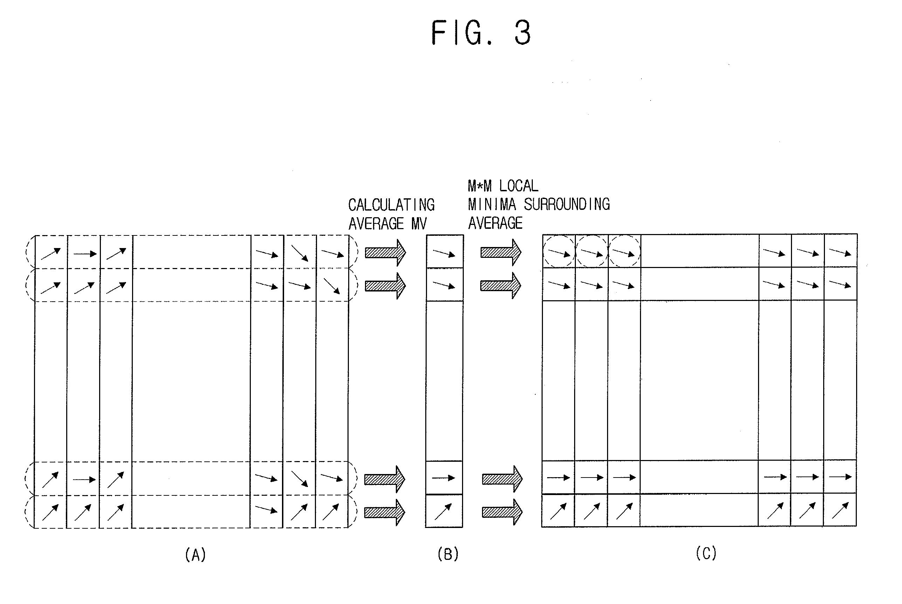

A motion estimator and a motion estimating method according to a first exemplary embodiment of the present invention will now be described with reference to Figures 2 and 3.

Figure 2 is a control block diagram of a motion estimator according to a first exemplary embodiment of the present invention. As shown in Figure 2, the motion estimator comprises an arbitrary motion estimation unit 10, a mean motion computation unit 20, a line motion generation unit 30, and a motion vector selection unit 40. Further, the motion estimator can comprise a motion correction unit 50.

The arbitrary motion estimation unit 10 divides a current frame into a large number of blocks having a predetermined size, and estimates an arbitrary motion vector by comparing a block (hereinafter, referred to as "current block") required to estimate its motion with a predetermined search area of a previous frame.

The arbitrary estimation unit 10 applies a full search block matching algorithm to compute a large number of motion prediction error values. Further, the arbitrary motion estimation unit 10 estimates a motion vector of each of the blocks from a location having the minimum motion prediction error value. The motion prediction error value may be computed in accordance with various approaches such as Sum of Absolute Difference (SAD) or Mean Absolute Difference (MAD).

The mean motion computation unit 20 computes a mean vector of the motion vectors of surrounding blocks adjacent to a current block based on motion vectors estimated from the arbitrary motion estimation unit 10. That is, an MxN size window comprising the current block is formed, and a mean of motion vectors within the window is then estimated.

For example, the window size may be a 3x3 size, and the entire range of motion can be better reflected as the window size becomes larger.

The mean motion computation unit 20 obtains a mean motion vector accumulating motion vectors of blocks previous to the current frame to reduce the amount of hardware and computing time. That is, to obtain a full motion vector, more delay time is needed because motion vectors next to a current block should be known, and thus a mean motion vector is obtained using motion vectors of blocks previous to the current frame.

The line motion generation unit 30 generates a line motion vector representing the degree of a horizontal motion of a current block using motion vectors of horizontal continuous blocks.

The line mean motion vector (*MV_Avg(n)*) and the line motion vector (*LineMV(n)*) are obtained by the following two expressions.

[EXPRESSION 1]

$$MV\_Avg(n) = \sum_{i=0}^{N} MotionVector(i,n)$$

[EXPRESSION 2]

$$LineMV(n) = LocalMin(MV\_Avg(n), Search\_Range)$$

(Wherein "n" is a vertical index of a corresponding block and "i" is a horizontal index.)

As shown by EXPRESSION 1, the line motion generation unit 30 computes a line mean motion vector, $MV\_Avg(n)$, based on motion vectors of blocks on a line to which a current block belongs.

EXPRESSION 1 assumes that motion errors in a full motion have a Gaussian distribution, wherein several blocks belonging to a same object move together. Accordingly, if motion vectors of several blocks belonging to a full motion are averaged, a result being almost the same as a real full motion can be obtained and accuracy becomes higher as the number of blocks used to obtain a mean becomes larger.

For example, since scrolling text in a news broadcast or the like occupies a large portion of a lower screen, the number of blocks having an 8x8 size is 60 being 480/8 in the case of an Standard Definition (SD) class having 480 pixels. Thus, when averaging motion vectors of such blocks when text scrolling occurs, a motion vector almost corresponding to the correct motion can be obtained.

Further, the line motion generation unit 30 searches a local minimum within a predetermined search area as centre-based on a mean point obtained in EXPRESSION 1, and then computes the local minimum as a line motion vector. This assumes that correct motion vectors exist around a local minimum among SAD values within a search area, and the local minimum exists at a location where a block is matched to some degree among real SDA values.

Here, if an N×M size search area is used in a full-search method for computing an arbitrary motion vector, a search area having a smaller size of N/2xM/2 or the like is used to obtain a line motion vector.

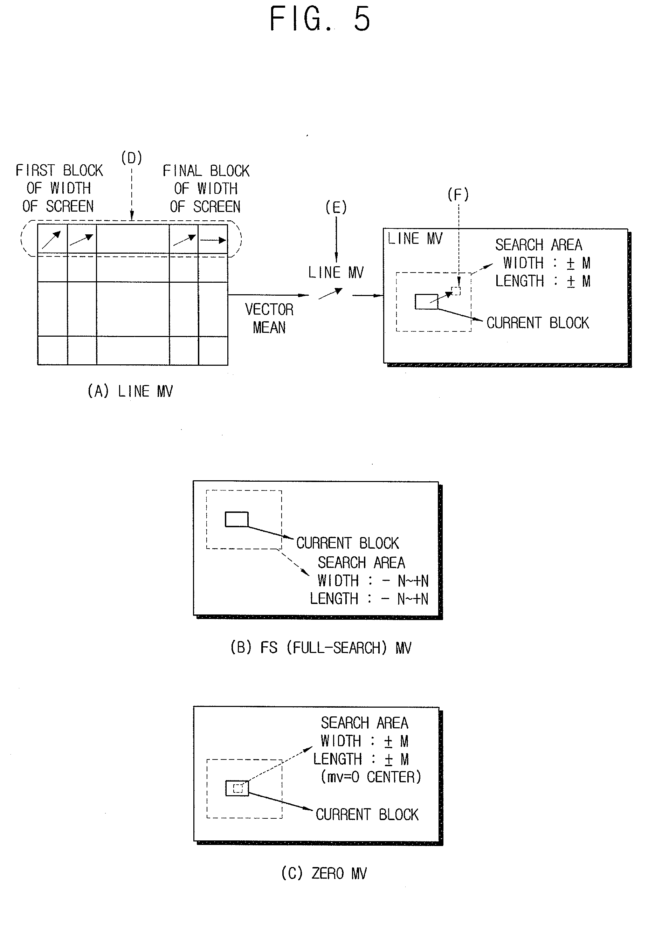

A vector extraction method of the line motion generation unit will now be described with reference to Figure 3. Figures 5(A), 5(B) and 5(C) denote motion vectors of each block, line mean motion vectors, and line motion vectors in accordance therewith, respectively.

As shown in Figure 3, the line motion generation unit 30 computes a line mean motion vector by line based on motion vectors of each block, and extracts a line motion vector searching a local minimum in an M×M search area.

Here, when a mean motion vector of horizontal blocks is computed, the line motion generation unit 30 can use motion vectors previous to the current frame so as to solve a frame delay. In the case of scrolling text moving by line, the same motions are continuously sustained so that there is no error even if motion information on a previous frame is used. Also, in the case of a mean motion vector, motion vectors previous to the current frame can be used to minimize frame delay.

The mean motion vector and the line motion vector, which are obtained in this manner, are input to the motion vector selection unit 40, and a final motion vector is selected by the motion vector selection unit 40. As shown in Figure 2, the motion vector selection unit 40 comprises SAD comparison unit 41 for comparing SAD values, and a multiplex (MUX) 43 for selecting and outputting any one of the mean motion vector and line motion vector in accordance with the compared result.

The MUX 43 selects and outputs a motion vector corresponding to the smaller of a mean SAD value in accordance with a mean motion vector, and a line SAD value in accordance with a line motion vector as a final motion vector of the current block. Thus, a correct motion vector between a mean motion vector and a line motion vector is selected, and an area is determined in which the line motion vector is applied, that is, an area in which scrolling text is generated.

A motion estimator according to the first exemplary embodiment of the present invention, however, selects correct motion vectors not using a separate algorithm for determining a text scroll area, but simply using SAD values.

SAD(m,n) value in a specific location(m,n) within a search area is represented by the following EXPRESSION 3.

[EXPRESSION 3]

$$SAD(m,n) = \sum_{i=0}^{N-1} \sum_{j=0}^{M-1} \left| pixel\_cur(m+i, n+j) - pixel\_prev(m,n) \right|$$

It is assumed that the smaller of a SAD value of a mean motion vector and a SAD value of a line motion vector reflects a more precise motion.

Selection of the appropriate motion vector can be implemented in simple hardware using the following expression:

[EXPRESSION 4]

$$MotionVector = \begin{cases} LineMV, if(LineSAD * w1 < MeanSAD * w2) \\ MeanMV, elsewhere \end{cases}$$

Where, "w1" and "w2" denote adjustable weighting parameters.

For example, if a correction of scrolling text is emphasized, w1 should be adjusted to be smaller than w2 so that a line motion vector can be selected, wherein w1 and w2 are weighting parameters with respect to a SAD value of a line motion vector. Further, as shown in Figure 2, a final motion vector output through the motion vector selection unit 40 can be passed through a motion correcting (smoothing) process by the motion correction unit 50.

The motion correcting process is generally applied more than once, which as the correcting process is repeatedly performed, a final motion vector is smoothed to be similar to surrounding motion vectors so that errors are decreased. However, if a final motion vector is excessively smoothed, it does not follow fast motions. In the first exemplary embodiment of the present invention, the motion correcting process performs two corrections, such as a first correction performed in a process for computing a mean motion vector with respect to surrounding blocks in the mean motion computation unit 20, and a second correction for finally correcting a final motion vector output from the motion vector selection unit 40.

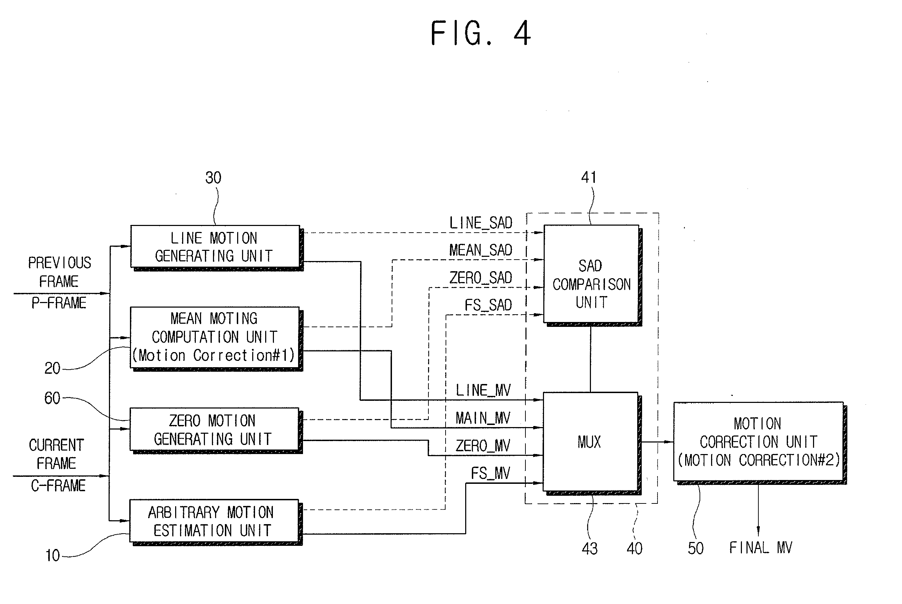

A motion estimator according to a second exemplary embodiment of the present invention will be described below with reference to Figure 4. Descriptions previously presented in the foregoing exemplary embodiment will not be repeated. As shown in Figure 4, a motion estimator comprises a mean motion computation unit 20, a line motion generation unit 30, motion vector selection unit 40, and a zero motion generation unit 60. Further, the motion estimator can also comprise an arbitrary motion estimation unit 10 and a motion correction unit 50.

The motion estimator according to the second exemplary embodiment of the present invention further comprises the zero motion generation unit 60. Descriptions for the mean motion computation unit 20 and the line motion generation unit 30 are comparable to the description presented with respect to the foregoing first exemplary embodiment and will not be repeated.

The zero motion generation unit 60 searches local minima existing within a small search area at a location where a motion vector is zero, and then generates a zero motion vector. Here, in the same manner as a line motion vector, the zero motion generation unit 60 obtains a local minimum within an M×M search area as centre-based on a specific location (because of a zero motion vector, (0,0)).

That is, search for an SAD value in surrounding local minima is more effective in minimizing influences due to noise or the like than simply obtaining of an SAD value with respect to a motion vector being "(0,0)".

The zero motion generation unit 60 is provided to solve the problem of discontinuous still images. Because a line motion vector is selected as a final motion vector when a line SAD value is smaller than a mean SAD value in blocks within a still image, such as a still logo, the corresponding blocks of the still image move to the direction of the text when the text is scrolling so that the still image appears broken or discontinuous. This is mainly generated in situations where blocks existing at the both sides of a still image include a portion of a scrolling text area. To address this problem, a weighting parameter is adjusted so that the motion vector selection unit 40 selects a mean motion vector in accordance with the foregoing exemplary embodiment. It is thus possible to lower vector selection performance in the scrolling text area. Accordingly, the zero motion generation unit 60 is added to determine whether or not there exists a still image so that correct motion vectors can be searched.

The motion vector selection unit 40 according to the second exemplary embodiment of the present invention selects and outputs any one of an input mean motion vector, an input line motion vector and an input zero motion vector as a final motion vector.

In the same manner as the foregoing first exemplary embodiment, the SAD comparison unit 41 compares mean SAD, line SAD and zero SAD values with each other, and the MUX 43 selects and outputs a motion vector corresponding to the smallest SAD value as a final motion vector based on the SAD comparison result. A priority order can be graded by adjusting weighting parameters multiplied by the respective SAD values.

In order to extract the respective motion vectors in this manner, the amount of hardware is preferably minimized. For this purpose, motion estimations are preferably shared, and a process of searching each local minimum from the mean motion computation unit 20, the line motion generation unit 30 and the zero motion generation unit 60 is possibly shared in a motion estimator through a full search.

Since the mean motion computation unit 20, the line motion generation unit 30, and the zero motion generation unit 60 search local minima around a mean vector, a line mean vector, and a zero vector in an area having a predetermined size, for example, 3x3, a SAD value is stored when the SAD value within a corresponding search area is computed when each of the search areas is set in the full-search motion estimator through full search.

Accordingly, mean motion vectors, zero motion vectors and line motion vectors can be implemented in hardware with only one full-search motion estimator. Since the arbitrary motion estimation unit 10 performs motion estimations through full search in the exemplary embodiments of the present invention, the respective motion vectors can be extracted sharing hardware of the arbitrary motion estimation unit 10.

A method for extracting motion vectors of a line motion generation unit 30, an arbitrary motion generation unit, and a zero motion generation unit 60 will now be described with reference to Figure 5.

Figures 5(A), 5(B) and 5 (C) show methods for generating line motion vectors, arbitrary motion vectors through full search and zero motion vectors, respectively. As shown in Figure 5(A), the line motion generation unit 30 averages motion vectors (D) on a line belonging to a current block to compute a line mean vector (E), and searches local minima in a predetermined search area $M \times M$ of the current block to extract a line motion vector (F).

Further, the arbitrary motion estimation unit 10 through full search, as shown in Figure 5(B), estimates an arbitrary motion vector comparing a current block with the full-search area, that is, $N \times N$ area of a previous frame. The search area of the arbitrary motion estimation unit 10 is set as a large size comprising search areas of the line motion generation unit 30, the mean motion computation unit 20, and the zero motion generation unit 60, so that it is possible to share hardware.

The zero motion generation unit 60 in Figure 5(C) searches a local minimum in a predetermined small search area at a centre based on a location where a current motion vector is zero in the current block.

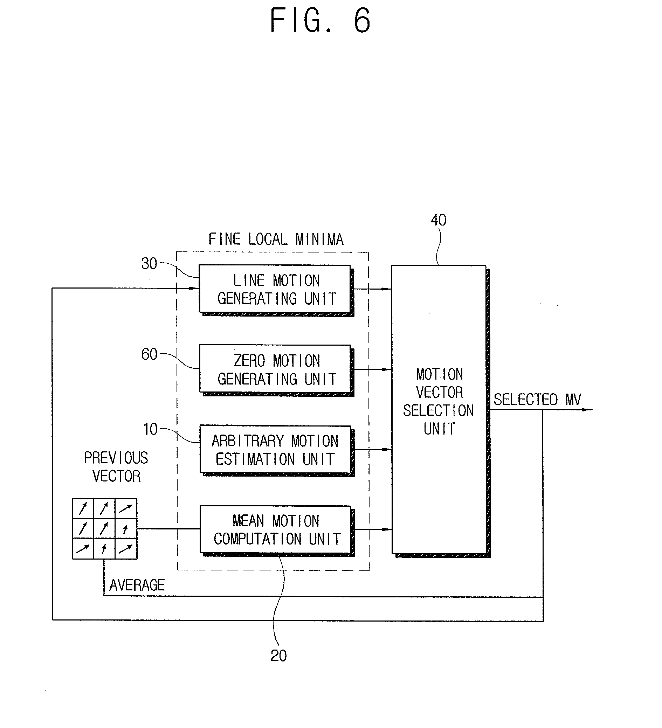

A motion estimator according to a third exemplary embodiment of the present invention will be described below with reference to Figures 3 and 6. Descriptions previously provided in the foregoing exemplary embodiments will not be repeated. As shown in Figure 3, in the motion estimator according to the third exemplary embodiment of the present invention, an input to a motion vector selection unit 40 is added to select an arbitrary motion vector through full search as a final motion vector.

The arbitrary motion vector comprises an original motion vector obtained through the full search, which is not previously processed. As described above, hardware of the arbitrary motion generation unit can be shared to search each local minimum in a fixed search area of a current frame from the mean motion computation unit 20, the line motion generation unit 30 and the zero motion generation unit 60.

The motion vector selection unit 40 selects and outputs any one of a mean motion vector, a line motion vector, a zero motion vector and an arbitrary motion vector as a final motion vector. In particular, to increase a convergence rate for real correct motions, an arbitrary motion vector can be selected as a final motion vector in the third exemplary embodiment of the present invention.

As described in the foregoing exemplary embodiment, each of the motion generation units can use a motion vector of the previous frame to minimize a frame delay and to reduce hardware load.

As shown in Figure 6, for situations in which the mean motion computation unit 20 generates a mean motion vector using motion vectors of a current block, for example, in a 3x3 area, the mean motion computation unit 20 should wait for motion vectors of the rest of the surrounding blocks to be computed, and a motion vector previous to the current frame (past vector) is used. Further, this is the same in the line motion generation unit 30. However, the convergence rate for real, correct motions can be delayed. If arbitrary motion vectors are selected for a situation in which a mean motion vector, a line motion vector, and a zero motion vector do not appropriately follow on-screen motion due to use of motion vectors of a previous frame, the convergence rate can be increased.

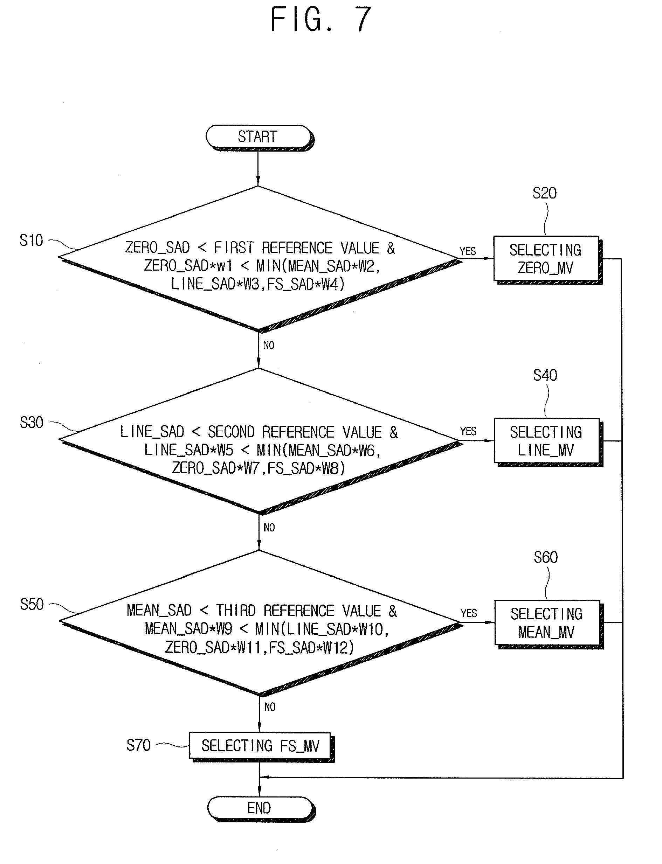

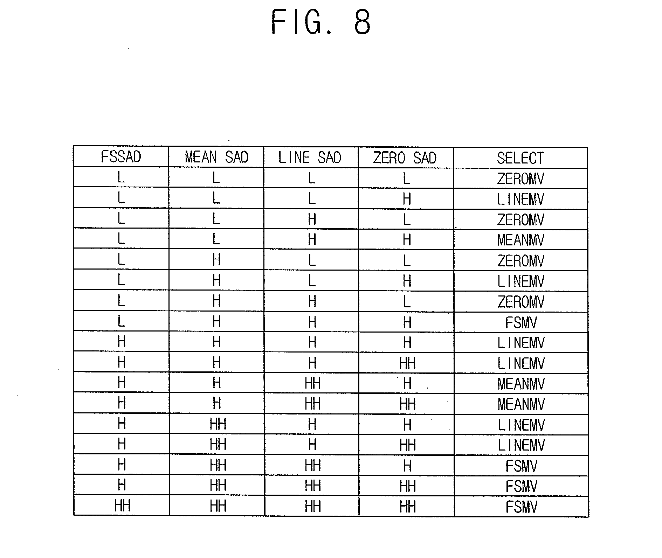

A method for selecting a final motion vector in the motion vector selection unit 40 according to a third exemplary embodiment of the present invention will be described below with reference to Figures 7 and 8.

Since several motion vectors may have similar values at the same time if the motion vector selection unit 40 selects a final motion vector with only SAD values, a priority order should be set for each of the motion vectors. In the third exemplary embodiment of the present invention, since protection of a still image from being broken has preference, a first priority order is graded to the zero motion vector. Next, in consideration of the importance of scrolling text, a second priority order is graded to the line motion vector. Continuously, to apply an arbitrary motion vector through full search in situations where other motion vectors are not precise, third and fourth priority orders are graded to the mean motion vector and the arbitrary vector, respectively.

As shown in Figure 7, an SAD comparison unit 41 within the motion vector selection unit 40 determines whether a zero SAD value is smaller than a first reference value, and whether a value multiplying the zero SAD value by a first weighting parameter is smaller than a minimum value of a value multiplying a mean SAD value by a second weighting parameter, a value multiplying a line SAD value by a third weighting parameter and a value multiplying a full-search SAD value by a fourth weighting parameter at operation S10.

If the determined result agrees with the condition at operation S10, the SAD comparison unit 41 outputs corresponding data to a MUX 43, and the MUX 43 selects and outputs a zero motion vector as a final motion vector at operation S20. Further, if the determined result does not agree with the condition at operation S10, the SAD comparison unit 41 determines whether the line SAD value is smaller than a second reference value, and whether a value multiplying the line SAD value by a fifth weighting parameter is smaller than a minimum value of a value multiplying the mean SAD value by a sixth weighting parameter, a value multiplying the zero SAD value by a seventh weighting parameter and a value multiplying the full-search SAD value by an eighth weighting parameter at operation S30.

If the determined result agrees with the condition at operation S30, the MUX 43 selects and outputs a line motion vector as a final motion vector at operation S40.

Further, if the determined result does not agree with the condition at operation S30, the SAD comparison unit 41 determines whether the mean SAD value is smaller than a third reference value, and whether a value multiplying the mean SAD value by a ninth weighting parameter is smaller than a minimum value of a value multiplying the line SAD value by a tenth weighting parameter, a value multiplying the zero SAD value by an eleventh weighting parameter and a value multiplying the full-search SAD value by a twelfth weighting parameter at operation S50.

If the determined result agrees with the condition at operation S50, the MUX 43 selects and outputs a mean motion vector as a final motion vector at operation S60, otherwise the MUX 43 selects and outputs an arbitrary motion vector as a final motion vector at operation S70.

Figure 8 is a table for a priority order and selection according to the third exemplary embodiment of the present invention. In Figure 8, "L", "H" and "HH" denote low, high and very high, respectively. As shown in Figure 7, since a priority order is graded in order of the zero motion vector, the line motion vector, the mean motion vector and the arbitrary motion vector, a final motion vector are selected in accordance with whether each motion vector is larger than each of the references. If all the SAD values are small, it is determined that the probability of a still image is high, and the priority order is graded to the zero motion vector. Further, since it is determined that a weight is graded to the line motion vector if the zero SAD value is relatively large and the mean SAD and the line SAD values are small, the line motion vector is selected. Furthermore, since it is determined that a correct motion is not searched if the full-search SAD value is smaller than the other SAD values, the arbitrary motion vector is selected. Therefore, correct motion vectors can be obtained in accordance with SAD values and priority orders.

As described above, according to embodiments of the present invention, there is provided a motion estimator for estimating correct motion vectors during the occurrence of scrolling text or the like on a moving object or a moving background and a motion estimating method thereof.

While the present invention has been particularly shown and described with reference to certain exemplary embodiments thereof, it will be understood by those of ordinary skill in the art that various changes in form and detail may be made therein without departing from the scope of the present invention as defined by the appended claims.

**Claims**

1.    A motion estimator for dividing a current frame into a plurality of blocks and estimating motion by comparing a current block with a previous frame, the motion estimator comprising:

a mean motion estimation unit (20) for computing a mean motion vector based on motion vectors of blocks adjacent to the current block;
a line motion generation unit (30) for generating a line motion vector in a search area based on motion vectors of horizontal blocks relating to the current block; and
a motion vector selection unit (40) for selecting and outputting one of the mean motion vector and the line motion vector as a final motion vector of the current block based on a mean motion expectation error value associated with the mean motion vector and a line motion expectation error value associated with the line motion vector.

2.    The motion estimator according to claim 1, wherein the motion vector selection unit is arranged to select and output a motion vector corresponding to the smaller of the mean motion expectation error value and the line motion expectation error value as the final motion vector of the current block.

3. The motion estimator according to claim 1 or 2, further comprising a motion correction unit (50) for correcting the final motion vector of the current block.

4. The motion estimator according to any one of the preceding claims, further comprising a zero motion generation unit (60) for computing a zero motion vector at a location where motion of the current block is zero; wherein the motion vector selection unit is arranged to select and output one of the mean motion vector, the line motion vector and the zero motion vector as the final motion vector of the current block based on the mean motion expectation error value, the line motion expectation error value and a zero motion expectation error value associated with the zero motion vector.

5. The motion estimator according to claim 4, wherein the motion vector selection unit is arranged to select and output a motion vector corresponding to the smallest of the mean motion expectation error value, the line motion expectation error value, and the zero motion expectation error value as the final motion vector of the current block.

6. The motion estimator according to claim 4 or 5, further comprising an arbitrary motion estimation unit (10) for estimating an arbitrary motion vector of the current block by comparing the current block with a full-search area set to the previous frame; wherein the motion vector selection unit is arranged to select and output one of the mean motion vector, the line motion vector, the zero motion vector and the arbitrary motion vector as the final motion vector of the current block based on the mean motion expectation error value, the line motion expectation error value, the zero motion expectation error value and an arbitrary motion expectation error value associated with the arbitrary motion vector.

7. The motion estimator according to claim 6, wherein the motion vector selection unit is arranged to select and output a motion vector corresponding to the smallest of the mean motion expectation error value, the line motion expectation error value, the zero motion expectation error value, and the arbitrary motion expectation error value as the final motion vector.

8. The motion estimator according to claim 6 or 7, wherein the motion vector selection unit is arranged to select and output the zero motion vector as the final motion vector of the current block if the zero motion expectation error value is smaller than or equal to a first reference value, and the third error value multiplying the line motion prediction error value by a third weight is smaller than or equal to a first minimum value being a minimum value of the first error value multiplying the zero motion prediction error value by a first weight, the second error value multiplying the mean motion prediction error value by a second weight, and the fourth error value multiplying the arbitrary motion prediction error value by a fourth weight.

9. The motion estimator according to any one of claims 6 to 8, wherein the motion vector selection unit is arranged to select and output the line motion vector as the final motion vector of the current block if the zero motion vector is not selected as the final motion vector, and if the line motion expectation error value is smaller than or equal to a second reference value, and a fourth error value multiplying the line motion expectation error value by a fifth weight is smaller than or equal to a second minimum value being a minimum value of a sixth error value multiplying the mean motion expectation error value by a sixth weight, a seventh error value multiplying the zero motion expectation error value by a seventh weight, and an eighth error value multiplying the arbitrary motion expectation error value by an eighth weight.

10. The motion estimator according to any one of claims 6 to 9, wherein the motion vector selection unit selects and outputs the mean motion vector as the final motion vector of the current block if the zero motion vector and the line motion vector are not selected and output as the final motion vector, and if the mean motion expectation error value is smaller than or equal to a third reference value, and a ninth error value multiplying the mean motion expectation error value by a ninth weight is smaller than or equal to a third minimum value being a minimum value of a tenth error value multiplying the line motion expectation error value by a tenth weight, an eleventh error value multiplying the zero motion expectation error value by an eleventh weight, and a twelfth error value multiplying the arbitrary motion expectation error value by a twelfth weight.

11. The motion estimator according to any one of claims 6 to 10, wherein the motion vector selection unit selects and outputs the arbitrary motion vector as the final motion vector of the current block if the zero motion vector, the line motion vector, and the mean motion vector are not selected as the final motion vector.

12. The motion estimator according to any one of the preceding claims, wherein the motion expectation error value is computed by one of the Sum of Absolute Difference (SAD) and Mean Absolute Difference (MAD).

13. The motion estimator according to claim 6, wherein the motion vector selection unit selects and outputs the final motion vector based on a first error value multiplying the mean motion expectation error value by a first weight, a second error value multiplying the line motion expectation error value by a second weight, a third error value multiplying the zero motion expectation error value by a third weight, and a fourth error value multiplying the arbitrary motion expectation error value by a fourth weight.

14. The motion estimator according to claim 13, wherein the motion vector selection unit selects and outputs the final motion vector in accordance with a priority order.

15. The motion estimator according to claim 14, wherein the priority order is set in order of the zero motion vector, the line motion vector, the mean motion vector, and the arbitrary motion vector.

16. The motion estimator according to claim 6, wherein the arbitrary motion estimation unit comprises an operator for computing the arbitrary motion vector; and
wherein at least one of the mean motion computation unit, the line motion generation unit, and the zero motion generation unit generates the motion vector sharing the operator.

17. The motion estimator according to claim 4, wherein the motion vector selection unit is arranged to select and output a motion vector corresponding to the smallest of a value multiplying the mean motion expectation error value by a first weight, a value multiplying the line motion expectation error value by a second weight, and a value multiplying the zero motion expectation error value by a third weight as the final motion vector.

18. The motion estimator according to any one of the preceding claims, wherein the motion vector selection unit is arranged to select and output a motion vector corresponding to the smaller of a value multiplying the mean motion expectation error value by a first weight and a value multiplying the line motion expectation error value by a second weight as the final motion vector of the current block.

19. A motion estimating method for dividing a current frame into a plurality of blocks and estimating motion by comparing a current block with a previous frame, the method comprising:

computing a mean motion vector based on motion vectors of blocks adjacent to the current block;
generating a line motion vector in a search area based on motion vectors of horizontal blocks on a line associated with the current block; and
selecting and outputting the mean motion vector or the line motion vector as a final motion vector of the current block based on a mean motion expectation error value and a line motion expectation error value.

20. The method according to claim 19, wherein outputting of the final motion vector comprises selecting and outputting a motion vector corresponding to the smaller of the mean motion expectation error value and the line motion expectation error value as a final motion vector of the current block.

21. The method according to claim 19 or 20, further comprising generating a zero motion vector at a location where motion of a current block is zero;
wherein outputting the final motion vector comprises selecting and outputting any one of the mean motion vector, the line motion vector, and the zero motion vector as a final motion vector of the current block based on the mean motion expectation error value, the line motion expectation error value, and a zero motion expectation error value in accordance with the zero motion vector.

22. The method according to claim 21, further comprising estimating an arbitrary motion vector of a current block by comparing the current block with a full-search area set to a previous frame;
wherein outputting the final motion vector comprises selecting and outputting any one of the mean motion vector, the line motion vector, the zero motion vector, and the arbitrary motion vector as a final motion vector of the current block based on the mean motion expectation error value, the line motion expectation error value, the zero motion expectation error value, and an arbitrary motion expectation error value in accordance with the arbitrary motion vector.

23. The method according to claim 22, wherein at least one of generating of the mean motion vector, generating of the line motion vector, and generating of the zero motion vector generates a motion vector based on a motion vector previous to the current frame.

24. The method according to claim 23, wherein outputting of the final motion vector comprises selecting and outputting the final motion vector in accordance with a priority order.

25. The method according to claim 24, wherein the priority order is set in order of the zero motion vector, the line motion vector, the mean motion vector, and the arbitrary motion vector.

26. The method according to claim 23, wherein outputting of the final motion vector comprises selecting and outputting the zero motion vector as a final motion vector of the current block if the zero motion expectation error value is smaller than or equal to a first reference value, and a third error value multiplying the zero motion expectation error value by a third weight is smaller than or equal to a first minimum value being a minimum value of a first error value multiplying the mean motion error value by a first weight, a second error value multiplying the line motion error value by a second weight, and a fourth error value multiplying the arbitrary motion error value by a fourth weight.

27. The method according to claim 26, wherein outputting of the final motion vector comprises selecting and outputting the line motion vector as a final motion vector of the current block if the zero motion vector is not selected as the final motion vector, and if the line motion expectation error value is smaller than or equal to a second reference value, and a fourth error value multiplying the line motion expectation error value by a fifth weight is smaller than or equal to a second minimum value being a minimum value of a sixth error value multiplying the mean motion expectation error value by a sixth weight, a seventh error value multiplying the zero motion expectation error value by a seventh weight, and an eighth error value multiplying the arbitrary motion expectation error value by an eighth weight.

28. The method according to claim 27, wherein outputting of the final motion vector comprises selecting and outputting the mean motion vector as a final motion vector of the current block if the zero motion vector and the line motion vector are not selected and output as the final motion vector, and if the mean motion expectation error value is smaller than or equal to a third reference value, and a ninth error value multiplying the mean motion expectation error value by a ninth weight is smaller than or equal to a third minimum value being a minimum value of a tenth error value multiplying the line motion expectation error value by a tenth weight, an eleventh error value multiplying the zero motion expectation error value by an eleventh weight, and a twelfth error value multiplying the arbitrary motion expectation error value by a twelfth weight.

29. The method according to claim 28, wherein outputting of the final motion vector comprises selecting and outputting the arbitrary motion vector as a final motion vector of the current block if the zero motion vector, the line motion vector, and the mean motion vector are not selected as the final motion vector.

30. Apparatus for motion estimation between frames of a video stream, comprising:

means (20) for generating a mean motion vector based on motion vectors of blocks adjacent to a current block;
means (30) for generating a line motion vector based on motion vectors of horizontal blocks on a line including the current block; and
means (40) for selecting the mean motion vector or the line motion vector as a final motion vector in dependence on error values associated with the mean motion vector and the line motion vector.

# FIG. 1
# (PRIOR ART)

# FIG. 2

P-FRAME, C-FRAME → ARBIITRARY MOTION ESTIMATION UNIT (10) → MEAN MOTION COMPUTATION UNIT (MOTION CORRECTION#1) (20)

MV OF HORIZONTAL CONTINUOUS BLOCKS → LINE MOTION GENERATING UNIT (30)

MEAN_SAD, LINE_SAD → SAD COMPARISON UNIT (41)

MEAN_MV, LINE_MV → MUX (43) (40)

MOTION CORRECTION UNIT (MOTION CORRECTION#2) (50) → FINAL MV

EP 1 742 485 A2

# FIG. 3

CALCULATING
AVERAGE MV

M*M LOCAL
MINIMA SURROUNDING
AVERAGE

(A)　　　　　　　　　　(B)　　　　　　　　　　(C)

# FIG. 4

EP 1 742 485 A2

# FIG. 5

FIRST BLOCK
OF WIDTH
OF SCREEN

(D)

FINAL BLOCK
OF WIDTH
OF SCREEN

(E)

LINE MV

(F)

LINE MV

SEARCH AREA
WIDTH : ± M
LENGTH : ± M

CURRENT BLOCK

VECTOR
MEAN

LINE MV

(A) LINE MV

CURRENT BLOCK

SEARCH AREA
WIDTH : − N~+N
LENGTH : − N~+N

(B) FS (FULL-SEARCH) MV

SEARCH AREA
WIDTH : ± M
LENGTH : ± M
(mv=0 CENTER)

CURRENT BLOCK

(C) ZERO MV

# FIG. 6

# FIG. 7

START

S10 — ZERO_SAD < FIRST REFERENCE VALUE & ZERO_SAD*w1 < MIN(MEAN_SAD*W2, LINE_SAD*W3,FS_SAD*W4)

YES → S20 SELECTING ZERO_MV

NO

S30 — LINE_SAD < SECOND REFERENCE VALUE & LINE_SAD*W5 < MIN(MEAN_SAD*W6, ZERO_SAD*W7,FS_SAD*W8)

YES → S40 SELECTING LINE_MV

NO

S50 — MEAN_SAD < THIRD REFERENCE VALUE & MEAN_SAD*W9 < MIN(LINE_SAD*W10, ZERO_SAD*W11,FS_SAD*W12)

YES → S60 SELECTING MEAN_MV

NO

S70 — SELECTING FS_MV

END

# FIG. 8

| FSSAD | MEAN SAD | LINE SAD | ZERO SAD | SELECT |
|-------|----------|----------|----------|--------|
| L | L | L | L | ZEROMV |
| L | L | L | H | LINEMV |
| L | L | H | L | ZEROMV |
| L | L | H | H | MEANMV |
| L | H | L | L | ZEROMV |
| L | H | L | H | LINEMV |
| L | H | H | L | ZEROMV |
| L | H | H | H | FSMV |
| H | H | H | H | LINEMV |
| H | H | H | HH | LINEMV |
| H | H | HH | H | MEANMV |
| H | H | HH | HH | MEANMV |
| H | HH | H | H | LINEMV |
| H | HH | H | HH | LINEMV |
| H | HH | HH | H | FSMV |
| H | HH | HH | HH | FSMV |
| HH | HH | HH | HH | FSMV |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6385245 B, De Haan